# EUROPEAN PATENT APPLICATION

(11) **EP 2 508 496 A1**
(43) Date of publication of application: **10.10.2012**
(21) Application number: 11002869.3
(22) Date of filing: 06.04.2011
(51) Int. Cl.: C04B 28/10, C04B 28/18

(54) **Magnesia based binder composition**

(71) Applicant: HeidelbergCement AG, 69120 Heidelberg (DE)
(72) Inventor: Bullerjahn, Frank, 69123 Heidelberg (DE); Zajac, Maciej, 69126 Heidelberg (DE)
(74) Representative: Wagner, Jutta

(57) **Abstract**

The present invention relates to a binder composition comprising magnesium oxide, a reactive SiO₂ and a hydrated magnesium carbonate of formula x MgCO₃ · y Mg(OH)₂ • z H₂O, wherein x ≥ 1, the carbonate may be non-stoichiometric, and at least one of y or z ≥ 0 and x, y, z may be integers or rational numbers, wherein the weight ratio of magnesia to hydromagnesite ranges from 1:20 to 20:1. The invention further relates to building materials made from the binder composition and to its use in construction.

## Description

The present invention relates to a binder composition based on magnesia, to building materials comprising it and to its use in construction.

Sorel cement (also known as magnesia cement) is a hydraulic cement first produced by Stanislas Sorel in 1867. The cement is a mixture of magnesium oxide (burnt magnesia) with magnesium chloride with the approximate chemical formula Mg₄Cl₂(OH)₆(H₂O)₈, corresponding to a weight ratio of 2.5-3.5 parts MgO to one part MgCl₂. In use it is typically combined with filler materials such as sand or crushed stone. It is used for grindstones, tiles, artificial stone (cast stone), cast floors, and even artificial ivory (e.g. for billiard-balls). It can withstand 10,000 - 12,000 psi of compressive force whereas standard Portland cement can only withstand 2,000 psi. Its chief drawback is its poor water resistance, making it unsuitable for construction applications. In addition, it is relatively expensive compared to standard concrete and gypsum.

There have been numerous proposals for overcoming the problems outlined above. An overview can be found in WO 2009/156740, which itself proposes to use a mixture of magnesia and hydrated magnesium carbonate as binder composition.

However, there still remains a need for low energy and low carbonate emitting binders.

Surprisingly it has been found that a mixture of magnesia, hydrated magnesium carbonate and a reactive SiO₂ provides a binder composition with more or less similar properties as portland cement, i.e. hardening or setting with water, respectively.

Thus, the present invention solves the object by providing a binder composition comprising magnesia, a reactive SiO₂ and a hydrated magnesium carbonate of formula x MgCO₃ • y Mg(OH)₂ • z H₂O, wherein x ≥ 1 and at least one of y or z ≥ 0 and x, y, z may be integers or rational numbers, wherein the weight ratio of magnesia to hydrated magnesium carbonate ranges from 1:20 to 20:1. The invention further solves the problem with building materials made from the binder composition and its use in construction.

The early strength of this new binder comes from the formation of brucite, magnesium silicate hydrate (MSH) and possibly from amorphous hydrated magnesium carbonate. The novel binder is further hardening in contact with water due to the ongoing formation of amorphous and water insoluble magnesium silicate hydrate according to the general reaction equation

n MgO + m SiO₂ + i H₂O → (MgO)ₙ · (SiO₂)ₘ • (H₂O)ᵢ

wherein n, m and i are all > 0, and can, independently from each other, be integers or rational numbers. Mg can be partially substituted by minor amounts of e.g. Ca, Na, K, Li, Ba, Al, Fe, Zn, Mn and / or trace elements like Cr, B, Co, Ni, Cu, As, Be, Rb, Sr, Cs, can be contained. The MSH gel can also contain minor amounts of F⁻, Cl⁻, Br⁻, I⁻ HS⁻, S²⁻, N³⁻, P³⁻, As³⁻, B^{x}, acetate, formate, citrate, oxalate, etc. The binder forms a body with high early compressive strength, a high ultimate strength, good stability below water and corrosion resistance against acid and alkaline solutions.

One advantage of the binder according to the invention is that the temperature needed for the calcination of MgCO₃ (normally around 750°C) is substantially lower than that for sintering the raw materials of portland cement. Thereby a considerable amount of CO₂ can be avoided, i.e. carbonate emission of the binder be reduced, compared to portland cement based binders. Another advantage is the possibility of using natural magnesium silicates, like for example olivine, serpentine and talc, as raw materials providing an additional carbon dioxide reduction. The sources of magnesium silicates and carbonates are globally widespread and most often located close to the surface. They can be mined with state of the art technologies. Still another advantage is the possibility of using relatively high amounts of natural and/or artificial puzzolans, waste etc. as raw materials.

The first component of the binder according to the invention is magnesium oxide, MgO. Possible sources of magnesium oxide are natural magnesium carbonates or magnesium containing carbonates [e.g. Magnesite, magnesium rich limestone, Dolomite, etc.], magnesium (containing) hydroxides and silicates as well as synthetic magnesium sources. Magnesium oxide is usually prepared by calcination. Useful are magnesium oxides that are low burned, i.e. from 400 to <750°C, middle burned, i.e. from 750°C to <1100°C, and hard burned, i.e. at ≥1100°C, as well as mixtures of two or all of these. The amount of magnesium oxide in the material used should be at least 95 %. Especially the iron content should preferably be kept as low as possible, as iron induces a significant decrease of the compressive strength. The calcium content should preferably be below 2 %, because in contact with water and hydrated magnesium carbonate calcium induces a fast stiffening as a result of the precipitation of calcite.

To achieve a fast setting mainly or exclusively low burned magnesium oxide should be used. For other demands the low temperature calcined magnesium oxide content can decrease to 10 % while the content of middle and minor hard burned magnesium oxide increases.

The surface of the magnesium oxide depends on the method of manufacturing it, typically it has a surface of more than 10 m²/g, as measured according to the Brunauer-Emmett-Teller (BET) method. Particularly useful is soft burned MgO with a surface of around 30 m²/g and of more than 60 m²/g.

The second component is a reactive silica, SiO₂. The term reactive silica denotes both natural and artificial SiO₂ that is able to undergo a hydraulic setting/hardening in presence of a suitable reactant which is MgO according to the invention. One possibility to determine the amount of reactive silica in a material is measurement of the soluble SiO₂ according to DIN EN 196-2. Other methods may be used. With methods relying on dissolution of the silica it is important that for materials with high proportion of reactive silica the results are not influenced by saturation effects. A lot of substances can be used as source of reactive silica like diatomaceous earth, micro-silica, silica fume, fine to ultra-fine quartz powder, (calcined) siliceous earth, natural puzzolans, synthetic puzzolans, blast furnace slag, fly ash, burnt oil shale, sewage sludge ash, rice husk ash, glass powder, etc. The amount of reactive silica in the material used should be at least 10 %, preferably at least 30 %. A SiO₂ comprising material which does not contain reactive silica or only traces is not useful, e.g. siliceous sand. The reactive silica should preferably be in the form of amorphous SiO₂. A material with a high proportion of reactive silica such as micro-silica and silica fume provides higher early strength and is preferred when such early strength is important. The material used as source of reactive silica typically has a Blaine surface of at least 2000 cm²/g, preferably from 2500 to 11000 cm²/g, most preferably from 3000 to 6000 cm²/g_{.}

In one preferred embodiment it is possible to partially or wholly replace magnesium oxide and reactive silica as separate raw material components by natural or artificial magnesium silicates, preferably natural magnesium rich silicates. Depending on the composition of the magnesium silicates either magnesium oxide or a source of reactive silica can be added. These materials should be pretreated to destroy the crystal lattice of the minerals and provide utilisable magnesium oxide and silica. Different artificial magnesium rich silicates, for example slags of iron production, are possible raw materials as well. The magnesium content of the materials should be at least 10 %, preferably above 30%. The magnesium to silica ratio of natural magnesium silicates can vary widely: e.g. possible Mg:Si ratio of: Serpentine ~1.5 [e.g. Mg₃Si₂O₅(OH)₄]; Chlorite-group Minerals [e.g. Mg-clinochlor (Mg,Fe²⁺)₅Al[(OH)₈|AlSi₃O₁₀]; Talc - 0.75 [e.g. Mg₃Si₄O₁₀(OH)₂], forsterite -0.5 [e.g. Mg₂SiO₄] and enstatit -0.33 [e.g. MgSiO₃].

The third component is a substance comprising magnesium carbonate either hydrated or un-hydrated and optionally magnesium hydroxide and designated hydrated magnesium carbonate. It corresponds to the empirical sum formula :

x MgCO₃ • y Mg(OH)₂ • z H₂O

wherein x ≥ 1 and y and/or z ≥ 0 and x, y, z may be integers but do not have to and the carbonate can be non-stoichiometric. One preferred hydrated magnesium carbonate is hydromagnesite [Mg₅(CO₃)₄(OH)₂ • 4H₂O]. These substances are either found naturally or are produced synthetically, as for example synthetic forms like hydromagnesite, basic magnesium carbonate, magnesia alba and/or varieties of the listed compounds produced through precipitation. In view of the hardening time a hydrated magnesium carbonate with not too much Mg(OH)₂ is preferred [Mg(OH)₂ < 10%]. The BET surface of precipitated hydrated magnesium carbonate is usually more than 5 m²/g whereby samples with a BET surface - 10 m²/g are designated heavy and those with a surface ≥ 20 m²/g are designated light. Particularly useful is hydrated magnesium carbonate with a surface of around 21 m²/g, around 30 m²/g or around 40 m²/g. In terms of price, workability and performance mixtures of different hydrated magnesium carbonates were possible, e.g. 60 % heavy and 40 % light or 60 % heavy and 30 % with a surface - 20 m²/g and 10 % of material with a surface - 40 m²/g.

The binder composition according to the invention preferably contains the magnesium oxide and the hydrated magnesium carbonate in a weight ratio in the range of from 1:20 to 20:1, preferably from 1:10 to 10:1 and most preferably from 1:1.5 to 1.5:1. The weight ratio of Mg (from MgO and hydrated magnesium carbonate):reactive Si can range from 10:1 to 1:10, preferably from 1:5 to 3:1, more preferably from 1:3 to 2:1 and most preferably from 1:1.5 to 1.5:1. The total amount of Si in the system can vary widely depending on the composition of the source of reactive silica. The other components could also contain Si. For the ratio of Mg to Si only the amount of reactive silica is taken into account, SiO₂ not available for hydration like e.g. from fillers or crystalline parts of a fly ash is ignored.

The amount of material used as source of reactive silica (e.g. diatomaceous earth, micro-silica, silica fume, fine to ultra-fine quartz powder, (calcined) siliceous earth, natural puzzolans, synthetic puzzolans, blast furnace slag, fly ash, burnt oil shale, sewage sludge ash, rice husk ash, glass powder, etc.) in the binder composition ranges typically from 15 to 99 % by weight of the binder composition, preferably from 20 to 80 % by weight, most preferably from 30 to 70 % by weight. In case of high proportions of reactive silica in the material used like e.g. for micro silica or silica fume, the amount of the material and the amount of reactive silica are essentially the same. For materials with lower proportions of reactive silica the amount of source material is substantially higher than that of reactive silica.

The combined amount of magnesium oxide (including its impurities) and hydrated magnesium carbonate typically ranges from 1 to 85 % by weight of the composition, preferably from 5 to 50 % and most preferably from 10 to 40 %.

The binder can consist of magnesium oxide, hydrated magnesium carbonate and silica, but typically it contains one or more usual additive(s). Naturally, the amounts of all components of one composition have to add up to 100 %.

As usual, the binder according to the invention may contain additives like various salts, e.g. carbonates and hydroxides, water glass [M₂O • n SiO₂; normally M = Na and / or K and n between 1 to 4] etc. to adjust its properties. Additives are used in their usual amounts and can be added as powder through mixing or intergrinding or as solution (e.g. waterglass, Na₂CO₃, K₂CO₃, etc).

Minor components, for example soluble carbonates, calcium hydroxide [Ca(OH)₂], free lime, calcined dolomite / magnesium rich calcite, sources of aluminium and / or iron etc., can be added. Preferably, the amount of extra calcium compounds, e.g. Ca(OH)₂ and/or CaO, has to be limited, as calcium ions form calcite in the presence of hydromagnesite which results in a decrease of its efficacy.

One preferred additive are plasticizers. Especially preferred are polyacrylate and polycarboxylate ether based superplasticizers, lignosulfonates, sulfonated naphthalene and/or melamine formaldhydes. Mixtures can be used. Preferably the binder contains from 0.05 to 5 % by weight of the composition of one or more plasticizer(s), more preferably from 0.5 to 3 % by weight and most preferred from 1 to 2 % by weight.

A further preferred additive are accelerators, especially such that additionally enhance the reactivity of the components of the binder. Preferred are NaHCO₃, Na₂CO₃ with or without water of crystallization, K₂CO₃ with or without water of crystallization, free lime, portlandite, calcined dolomite (preferably low temperature calcined, i.e. at up to 750 °C), water glass, etc. and mixtures of thereof. Preferred amounts of the accelerators are 0.01 % to 25 % by weight of the binder composition, preferably 0.1 % to 5 % by weight. Also applicable are NaCl, CaCl with or without water of crystallization, sources of sulphate, phosphate or chlorides and mixtures thereof and with the preferred accelerators but only in very small dosages, typically in the range of 0.01% to 2%, to avoid the formation of water soluble sorel phases.

In one embodiment water soluble carbonates and/or hydrogencarbonates are used as accelerator. Sodium hydrogencarbonate was found to provide an exceptional increase in early strength and reduction of delay until stiffening. Carbonates can be useful when steel reinforcement is present due to the increase in pH.

The water to binder ratio is preferably from 0.15 to 1.50, more preferred from 0.3 to 0.75. It is adapted to the intended use, e.g. a lower ratio is selected for for high ultimate strength and a higher ratio in case of use for a floor screed.

In a preferred embodiment the binder composition substantially excludes constituents that lead to the formation of unwanted phases like sorel cement, such as chlorides, sulfates, phosphates etc. or includes only small amounts thereof so that the formation of the unwanted phases is negligible.

A preferred binder composition includes [1] fresh calcined and/or aged magnesium oxide [BET normally ≥10 m²/g], [2] a source of reactive SiO₂ (Blaine surface ≥ 2000 cm²/g: ground diatomaceous earth; micro-silica, silica fume, fine to ultra-fine quartz powder, (calcined) siliceous earth, natural and/or synthetic puzzolans: blast furnace slag, fly ash, burned oil shale, Sewerage sludge ash, rice husk, glass powder, etc.), [3] hydromagensite (BET normally ≥10 m²/g), [4] plasticizer and [5] minor solidification-accelerating additive: soluble carbonates [for example NaHCO₃, Na₂CO₃, etc.]; free lime and/or portlandite and/or subsidiary at low temperature calcined dolomite [≤750°C] and/or possibly a source of chloride, sulphate, phosphate, water glass, puzzolane etc.

The workability of a binder-water system can be improved by the addition of plasticizers, such as lignosulfonates, sulfonated naphthalene, sulfonated melamine formaldehydes, polyacrylate and polycarboxylate ether based superplasticizers. Superplasticizers are particularly used to lower the water content of the composition in order to obtain a denser microstructure and thus a product with higher strength and better durability. A low addition of water will generally result in a higher viscosity of the composition which is difficult to work with. However, the application of a superplasticizer enables the water-binder system to retain good workability and eases its use and placement. The dosage of superplasticizers is advantageously adapted to the used source of reactive SiO₂. If, e.g. diatomaceous earth is used as a SiO₂ source, no negative effect, concerning a possible retardation or a decrease of the final strength, is observed utilizing dosages from 0.05 % to 5 %, preferably 0.5 % to 3 % and most preferably 1 % to 2 % of polycarboxylate type superplasticizer (dry powder). However, additions above 0.3 % of polycarboxylate type superplasticizer in mixtures with blast furnace slag resulted in a slight decrease of the early age compressive strength.

The main components of the binder are preferably mixed very well (due to their high fineness) to achieve a homogenous composition. Mixing can be performed with any known devices. In one embodiment the component powders are dry mixed and homogenized in a Taumel-mixer. Liquid additives, i.e. liquid substances or such typically provided as solution like the polycarboxylate type superplasticizer are preferably added to the mixing water.

The binder can be used to formulate a concrete, mortar or plaster and other construction chemical products. It replaces the known binders portland cement, high alumina cement and the like in these materials. To this end the common further constituents are mixed in a manner known per se with the binder according to the invention. It is within the scope of the invention to provide a dry mix containing a part of the binder as well as all or a part of the additives and other constituents if wanted and to add the rest of the binder constituents as well as eventually remaining other additives and constituents at the site of use, e.g. prior to or concurrently with the water.

The binder according to the invention can be advantageously used for massive construction, precast building elements, repair grouts, tile adhesives, underground and mining applications, fixation of contaminants, top layer repair and protective applications.

Besides water, aggregate is typically added to the binder. Sand, natural gravel and crushed stone are mainly used for this purpose. Recycled aggregates (from construction, demolition and excavation waste) are increasingly used as partial replacements of natural aggregates, while a number of manufactured aggregates are also permitted. The amount of aggregate usually ranges from 25 to 70 % by weight of the building material and can be up to 95 % by weight. The size depends on the intended application.

The binder has depending on its composition (w/b ratio, used aggregate, used source of SiO₂, form of the product body) a white to light grey colour, which is retained after the material is hydrated. This feature as well as the light weight of the produced components allows the binder composition to be used for premium construction products. The addition of different pigments is possible. The product can be optimized by addition of filler: for example limestone, glass granulates, etc.

The binder composition offers the possibility to incorporate/bind heavy metals which are more soluble at high pH-values. First test trials with addition of heavy metals like Zn and Pb (as oxides or carbonates) in the range from 1 to 5 % to mixtures of MgO, SiO₂ and hydromagnesite showed that they have no negative effect on the hardening.

An additional and surprising benefit is the availability of CO₂ through the reaction of hydromagnesite with water. In contact with water and a suitable chemical species to bind carbonate ions, it seems that the hydromagnesite releases its carbonate into the solution. If for example calcium is available the available free CO₂ can bind Ca²⁺ ions and precipitates the Ca²⁺ ions as calcite.

The invention will be illustrated further with reference to the examples that follow, without restricting the scope to the specific embodiments described. If not otherwise specified any amount in % or parts is by weight and in the case of doubt referring to the total weight of the composition/mixture concerned.

The invention further includes all combinations of described and especially of preferred featurest that do not exclude each other. A characterization as "approximately", "around" and similar expression in relation to a numerical value means that up to 10 % higher and lower values are included, preferably up to 5 % higher and lower values, and in any case at least up to 1 % higher and lower values, the exact value being the most preferred value or limit.

### Example 1

The reaction of several combinations of the substances with water was tested. A combination of brucite [Mg(OH)₂] or magnesite [MgCO₃] or hydromagnesite [Mg₅(CO₃)₄(OH)₂·4H₂O] with SiO₂, either ground diatomaceous earth, silica fume, or calcined siliceous earth, and H₂O, does not show any or only very low hardening effect within 7 days. The combination of at least two of brucite [Mg(OH)₂], magnesite [MgCO₃] and hydromagnesite [Mg₅(CO₃)₄(OH)₂·4H₂O] with a source of reactive SiO₂ and H₂O did also not show any or only very low hardening effect within 7 days. Mixing MgO and SiO₂ with water reveals a measurable stiffness after 1 to 2 days, depending on the reactivity of the MgO. This is probably due to precipitation of Mg(OH)₂ and further increased due to the formation of a magnesium carbonate (see formula above) and MSH phases. A significant hardness is reached after 28 days. The combination of MgO and hydromagnesite leads to a hardened product upon contact with water as a result of the formation of brucite and different magnesium carbonates. Mixtures of MgO, hydromagnesite [Mgs(CO₃)₄(OH)₂·4H₂O], and SiO₂, optionally with other minor components, revealed superior results in comparison to every other composition. Also, the addition of a more reactive source of SiO₂ lead to an increase of the compressive strength. First trials used ground diatomaceous earth [-30 % amorphous SiO₂] and a second trial used calcined siliceous earth [-87 % reactive quartz, ~10 % amorphous SiO₂].

### Example 2

The development of compressive strength and the crystal structure were determined for the following compositions:
M1: 50% MgO / 45% SiO₂ (ground diatomaceous earth) / 5% NaHCO₃
M2: 25% MgO / 25% Mg₅(CO₃)₄(OH)₂·4H₂O / 45% SiO₂ (ground diatomaceous earth) / 5% NaHCO₃
M3: 25% MgO / 25% Mg₅(CO₃)₄(OH)₂·4H₂O / 50% SiO₂ (calcined siliceous earth)
M4: blast furnace slage
M5: 2.5 % MgO / 5 % Mg₅(CO₃)₄(OH)₂·4H₂O / 92.5 % blast furnace slage
The water/binder ratio for M1, M2, and M3 was 0.75 and 1% PCE (polycarboxylat plasticizer) with regard to the dry mix was added ontop. The water/binder ratio for M4 and M5 was 0.35 and 0.1% PCE with regard to the dry mix was added ontop. For M1 and M2 corundum was used as internal standard. The ground blast furnace slag was composed of 37.8 % CaO, 33.4 % SiO₂, 14.3 % Al₂O₃, 9.3 % MgO (RFA) and had a Blaine fineness of -4070 cm²/g. The samples were produced by mixing the binder composition with water at room temperature, filling the slurry in different moulds (for example: 40 mm x 40 mm x 1600 mm) and curing inside the mould for 24 hours at 20°C and at 95 percent relative humidity. After 24h the samples were demoulded and cured for 7 days below water or in air in an air-conditioned room.

According to X-ray diffraction measurements the initial reaction product of M2 after 1 day of hydration was a surprisingly low amount of brucite and a significant amount of X-ray amorphous phase which seems to be MSH, maybe mixture of X-ray amourphous carbonate and MSH. After 7 or 28 days respectively, the amount of brucite decreased significantly whereas the amount of X-ray amorphous phase further increased. The compressive strength of the samples increased as well. The mixtures of 25% MgO + 25% hydromagnesite + 50% reactive SiO₂ had a higher compressive strength than mixtures of 50% MgO + 50% reactive SiO₂ (same preparation and w/b ratios). The variation of the SiO₂ source lead to an additional increase of the early and final strength. The results show that the hardening mechanism of the binder according to the present invention is a formation of magnesium silicate hydrate and acceleration of its formation through addition of the special magnesium carbonate.

**Table 1**

| | **Brucite [%]** | | | **X-Ray amorphous content [%]** | | | **Compr. Strength [MPa]** | | |
|---|---|---|---|---|---|---|---|---|---|
| | **1d** | **7d** | **28d** | **1d** | **7d** | **28d** | **1d** | **7d** | **28d** |
| **M1** | 38 | 35.8 | 37.1 | 31.7 | 30.3 | 29.5 | 0 | 10.3 | 10.2 |
| **M2** | 18 | 12.9 | 6.8 | 33.8 | 37.4 | 43.8 | 0 | 15.1 | 17.3 |
| **M3** | | | | | | | 18.3 | 22.7 | 33.5 |
| **M4** | | | | | | | 0 | 2.8 | 10.9 |
| **M5** | | | | | | | 20.7 | 23.9 | 36.65 |

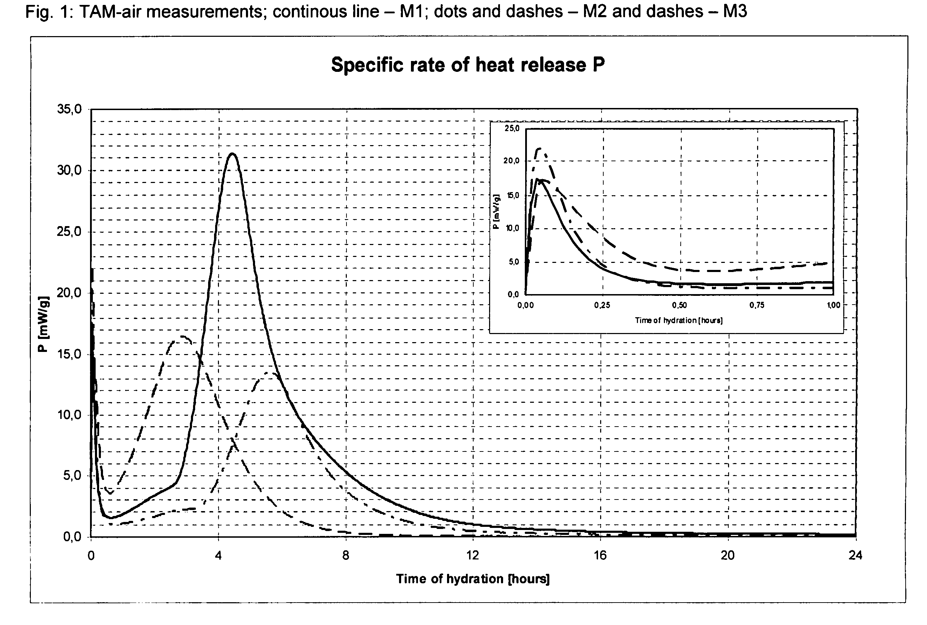

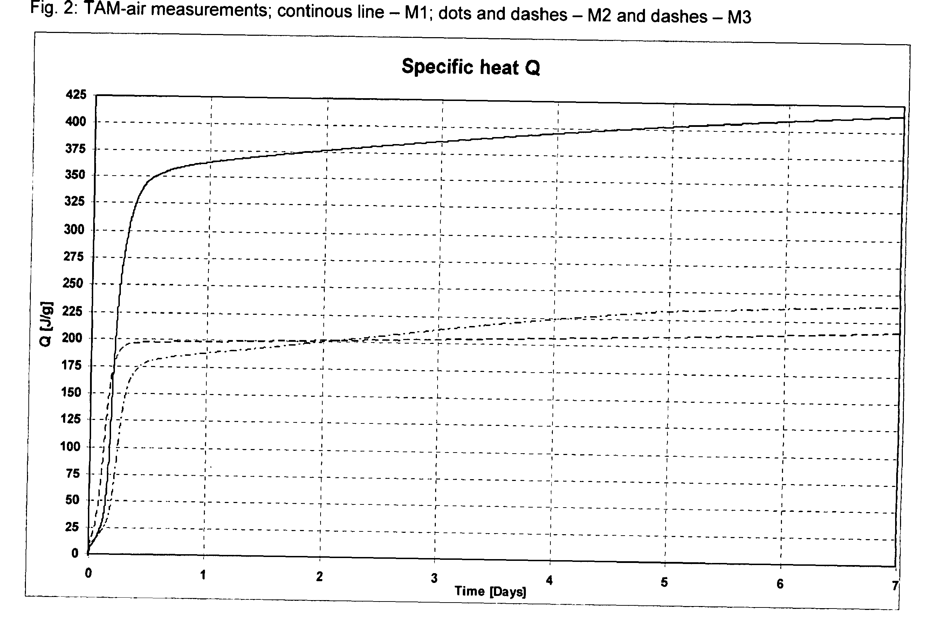

The results of a heat of hydration measurement (determined by a differential scanning calorimeter [TAM-air]) of the paste of samples M1, M2 and M3 with a w/b of 0.75 are depicted in figure 1 and 2 and table 2.

**Table 2**

| | | Unit | **M1** | **M2** | **M3** |
|---|---|---|---|---|---|
| | | | 20.-27.10.10 | 20.-27.10.10 | 22.-29.11.10 |
| w/z | Value | | 0.75 | 0.75 | 0.75 |
| 0-2 | Hours | J/g | 20 | 17 | 49 |
| 0-6 | Hours | J/g | 254 | 106 | 189 |
| 0-8 | Hours | J/g | 311 | 157 | 196 |
| 0-12 | Hours | J/g | 347 | 179 | 197 |
| 0-24 | Hours | J/g | 363 | 187 | 198 |
| 0-2 | Days | J/g | 376 | 199 | 201 |
| 0-3 | Days | J/g | 386 | 211 | 203 |
| 0-4 | Days | J/g | 395 | 223 | 206 |
| 0-5 | Days | J/g | 403 | 232 | 208 |
| 0-6 | Days | J/g | 409 | 236 | 212 |
| 0-7 | Days | J/g | 415 | 239 | 215 |

A dependence of the position of the peak and its shift depending on the used source of silica can be clearly seen during the first 8 hours of hydration. The addition of a highly reactive source of SiO₂ shifted the peak to earlier times which directly results in a significant higher 1 day compressive strength. In table 2 the cumulative specific heat Q of the specific intervall up to seven days of hydration is given and in figure 2 the measured data given in table 2 is plotted over time. The measurements reveal that the cumulative specific heat Q continues to grow at a slow rate after one day of hydration.

## Claims

1. Binder composition forming magnesium silicate hydrate upon reaction with water comprising magnesium oxide, a reactive SiO₂ and a hydrated magnesium carbonate of formula x MgCO₃ • y Mg(OH)₂ • z H₂O, wherein x ≥ 1, the carbonate may be non-stoichiometric and at least one of y or z ≥ 0 and x, y, z may be integers or rational numbers, wherein the weight ratio of magnesia to hydrated magnesium carbonate ranges from 1:20 to 20:1 and wherein the weight ratio of Mg (from the Magnesium oxide and the hydrated magnesium carbonate) to reactive Si ranges from 1:10 to 10:1.

2. Binder composition as claimed in claim 1, **characterized in that** the weight ratio of magnesia to hydrated magnesium carbonate ranges from 1:10 to 10:1 and preferably from 1:1,5 to 1,5:1.

3. Binder composition as claimed in claim 1 or 2, **characterized in that** the binder compostion comprises a source of the reactive SiO₂ selected from ground diatomaceous earth, micro-silica, silica fume, fine to ultra-fine quartz powder, (calcined) siliceous earth, natural and/or synthetic puzzolans, blast furnace slag, fly ash, burnt oil shale, sewage sludge ash, rice husk ash, glass powder and mixtures of two or more thereof.

4. Binder composition as claimed in claim 1, 2 or 3, **characterized in that** a source of reactive SiO₂ has a Blaine surface of ≥ 2000 cm²/g, preferably from 2500 to 11000 cm²/g, most preferably from 3000 to 6000 cm²/g.

5. Binder composition as claimed in at least one of claims 1 to 4, **characterized in that** the amount of a material used as source of reactive silica in the binder composition ranges from 15 to 98 % by weight of the binder composition, preferably from 20 to 80 % by weight, most preferably from 30 to 70 % by weight.

6. Binder composition as claimed in at least one of claims 1 to 5, **characterized in that** the combined amount of magnesium oxide and hydrated magnesium carbonate in the binder composition ranges from 2 to 85 % by weight of the composition, preferably from 10 to 50 % by weight and most preferably from 20 to 40 % by weight.

7. Binder composition as claimed in at least one of claims 1 to 5, **characterized in that** one or more plasticizers are contained.

8. Binder composition as claimed in claim 7, **characterized in that** the one or more plasticizers are selected from polyacrylate and polycarboxylate ether based superplasticizers, lignosulfonates, sulfonated naphthalene and/or melamine formaldehydes.

9. Binder composition as claimed in claim 7 or 8, **characterized in that** the plasticizer is present in an amount of from 0.05 % to 5 % by weight of the composition, preferably from 0.5 % to 3 % and most preferably from 1 % to 2%.

10. Binder composition as claimed in at least one of claims 1 to 9, **characterized by** comprising 0.01 % to 25 % by weight of the composition, preferably 0.1 % to 5 % of one or more of NaHCO₃, Na₂CO₃, K₂CO₃, free lime, portlandite, calcined dolomite, and water glass.

11. Building material made from the binder composition according to anyone of claims 1 to 10 by mixing with water at a water to binder ratio of 0.15 to 1,50.

12. Building material according to claim 11, **characterized in that** it contains up to 95 % by weight, preferably 25 to 70 %, of aggregates and or filler.

13. Use of a binder composition as claimed in anyone of claims 1 to 10 for massive construction, precast applications, repair grouts, tile adhesives, underground and mining applications, fixation of contaminants, especially heavy metal ions, top layer repair and protective applications.
